# EUROPEAN PATENT APPLICATION

(11) **EP 1 422 496 A1**
(43) Date of publication of application: **26.05.2004**
(21) Application number: 02753210.0
(22) Date of filing: 30.07.2002
(51) Int. Cl.: G01B 11/24

(54) **CALIBRATION OBJECT**

(30) Priority: 03.08.2001 JP 2001236120
(71) Applicant: TOPCON CORPORATION, Tokyo (JP)
(72) Inventor: OTANI, Hitoshi, Itabashi-ku, Tokyo 174-8580 (JP); KOCHI, Nobuo, Itabashi-ku, Tokyo 174-8580 (JP)
(74) Representative: HOFFMANN - EITLE
(86) International application number: PCT/JP2002/007711
(87) International publication number: WO 2003/014664

(57) **Abstract**

A calibration subject (11, 11B) for providing a reference dimension for use in measuring the surface shape of a measuring object to be photographed in stereo comprises an origin reference point target 110 corresponding to the origin position for three-dimensional measurement and reference targets (113, 113B) arranged in such a manner that at least six of them are included in each of stereo images photographed from a plurality of directions. The positions of the reference targets are determined in advance with respect to the origin reference point target 110.

## Description

### Technical Field

This invention relates to a calibration subject suitable for use in a surface shape measuring apparatus for three-dimensionally measuring the surface shape of a trove, human body, vehicle, machine structure or the like in a non-contact manner.

### Background Art

To measure the surface shape of a trove such as a clay pot, a person makes a sketch of it, measuring it with a ruler or the like, or a contact type measuring instrument which measures the surface shape of the object by tracing the contour of the object is used. A non-contact type measuring instrument which photographs the object using a slit light source or measures the object using a laser beam is also used.

In clothing stores, salespeople measure the body size of customers with tape measures to determine the size of clothing items which suit them best. In the case of a vehicle or a machine structure, a surface shape measuring apparatus is used to check a prototype in designing, to check the products before shipment, or to determine the replacement timing of parts at periodic inspections. In earth volume measurement, the earth is put in a specified vessel and its surface is smoothed to measure the amount of the earth. In recent years, a electro-optical distance measuring instrument or an ultrasonic distance measuring instrument is used to measure the position of the surface of the earth or an operator walks on the earth with a GPS (global positioning system) to measure the amount of the earth. A large scale laser device is also used to measure the amount of the earth by an optical cutting method.

However, the equipment cost is high to measure the surface shape of a trove with a conventional contact or non-contact type measuring instrument.

In the case of human bodies, there are many customers who don't want to have their body size measured by a salesperson. It may be a good idea to install a non-contact type measuring instrument for measuring the surface shape of a human body in retail shops. However, such a system has not been widely adopted since it causes a problem regarding privacy of the customers and requires the shops to invest a large amount of money.

In the case of a vehicle or machine structure, a large scale apparatus for measuring the surface shape is required and the measurement takes a long time. Especially, in checking products before shipment, a delay in the check affects the delivery date of the products to the customers. In periodic inspections, if the measurement cannot be quickly performed within a given period, the influence on the operation of the equipment will be significant at the customers.

In earth volume measurement, there are following problems.
1) It takes time and effort to smooth the earth. Also it is difficult to get high accuracy.
2) To measure the entire surface with a electro-optical distance measuring instrument or an ultrasonic distance measuring instrument is not practical because it takes a long time. Only a part of the earth surface is measured in some cases to shorten the measurement time, but it is difficult to get high accuracy.
3) When a GPS is used, an operator must carry a GPS terminal. It is troublesome to the operator.

The object of the present invention is to solve the above problems and to provide a calibration subject which enables a surface shape measuring apparatus to measure the surface shape of a measuring object such as a trove or human body precisely even if a photographing device is not precisely positioned.

### Disclosure of the Invention

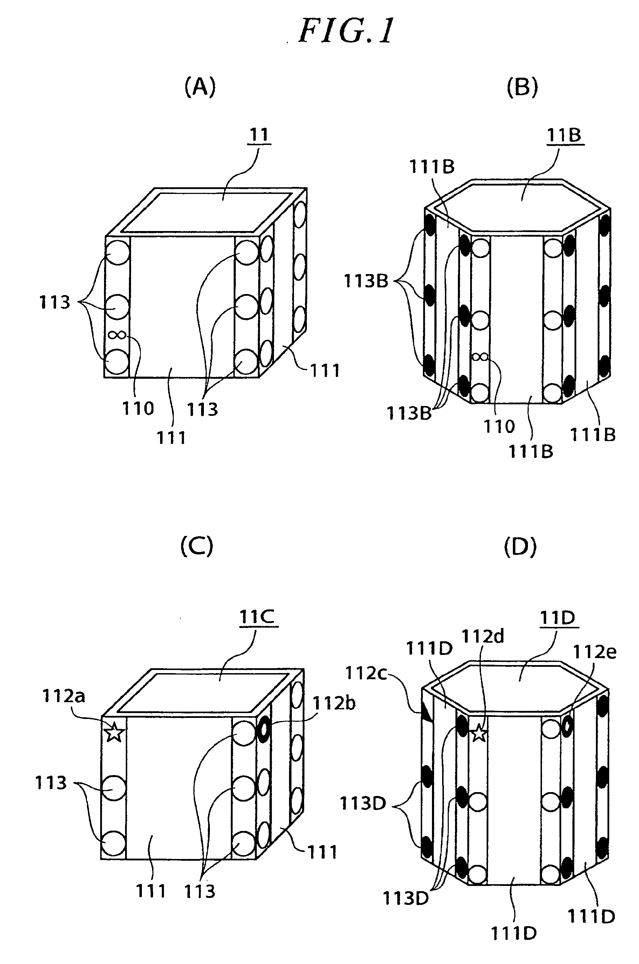

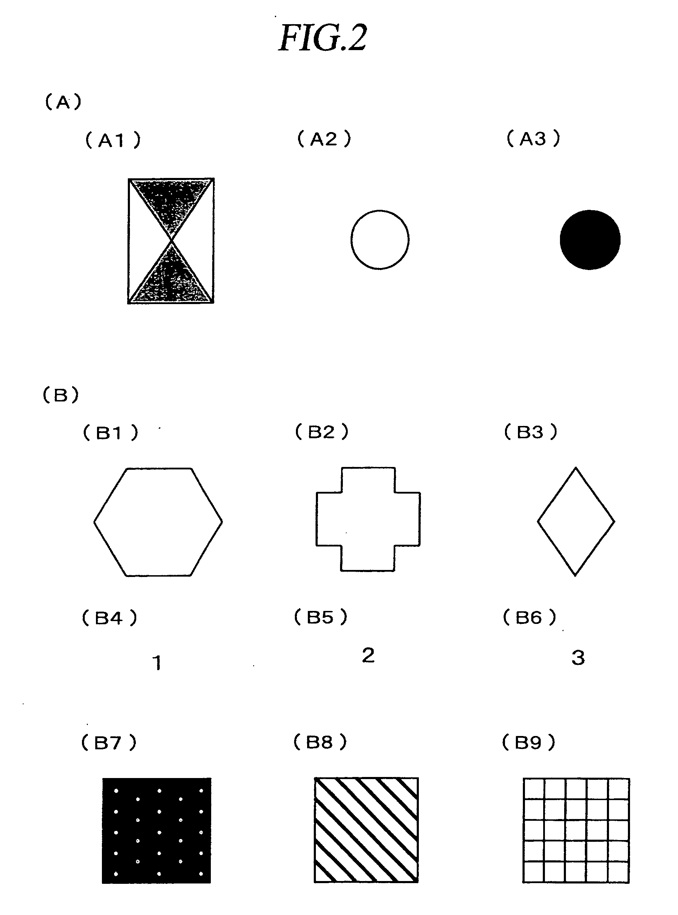

The calibration subject of the first invention for accomplishing the above object is, as shown for example in FIG. 1(A) and FIG. 2(B), a calibration subject (11, 11B) for providing a reference dimension for use in measuring the surface shape of a measuring object to be photographed in stereo, and comprises an origin reference point target 110 corresponding to the origin position for three-dimensional measurement and reference targets (113, 113B) arranged in such a manner that at least six of them are included in each of stereo images photographed from a plurality of directions. The positions of the reference targets are determined in advance with respect to the origin reference point target 110.

Preferably, the reference targets can be distinguished from the origin reference point target by its shape, color, size, pattern or the like. According to the calibration subject of the first invention, since the positions of the reference targets are determined in advance with respect to the origin reference point target, the surface shape of the measuring object can be measured easily based on rectified stereo images of the measuring object. Here, the principle of the measurement of the surface shape of a measuring object using stereo-photographing will be described. Images of a calibration subject photographed in stereo are rectified so that the reference targets can be stereoscopically viewed. At this time, photographing parameters of the optical system used to photograph the calibration subject in stereo for use in rectifying the images are obtained. Thus, when a measuring object is photographed with the same optical system as used to photograph the calibration subject in stereo, images of the measuring object photographed in stereo can be rectified using the photographing parameters obtained with the calibration into images which can be viewed stereoscopically.

The calibration subject of the second invention for accomplishing the above object is, as shown for example in FIG. 1(C) and FIG. 1(D), a calibration subject (11C, 11D) for providing a reference dimension for use in measuring the surface shape of a measuring object to be photographed in stereo, and comprises reference targets (112a, 112b, 113; 112c, 112e, 113D) characterized so that, when the calibration subject is photographed from a plurality of directions for three-dimensional measurement, the photographing direction can be unequivocally discriminated by the reference targets (112a, 112b, 113; 112c, 112e, 113D) included in the photographed image data, and the reference targets (112a, 112b, 113; 112c, 112e, 113D) are arranged in such a manner that at least six of them are included in each of photographed images.

The calibration subject of the third invention for accomplishing the above object is, as shown for example in FIG. 1(C) and FIG. 1(D), a calibration subject (11C, 11D) for providing a reference dimension for use in measuring the surface shape of a measuring object to be photographed in stereo, and comprises at least three reference sides (111, 111D), side reference targets (112a, 112b; 112c, 112d, 112e) for distinguishing the reference sides (111, 111D) from one another, and at least six reference targets (113, 113D) provided on the reference sides (111, 111D), and the positions of the reference targets (113, 113D) are known in advance. The surface shape of the measuring object to be photographed in stereo can be measured using the side reference targets (112a, 112b; 112c, 112d, 112e) and the reference targets (113, 113D).

According to the calibration subject of the third invention, since the reference sides can be distinguished from one another by the side reference targets, the surface shape of the measuring object can be measured easily based on rectified stereo images of the measuring object.

Preferably, a frame body on which the origin reference point target, side reference targets and reference targets are provided is used as the calibration subject. Then, since the calibration subject is not easily hidden behind the measuring object, the photographing can be performed smoothly when the measuring object is photographed in stereo from at least three directions.

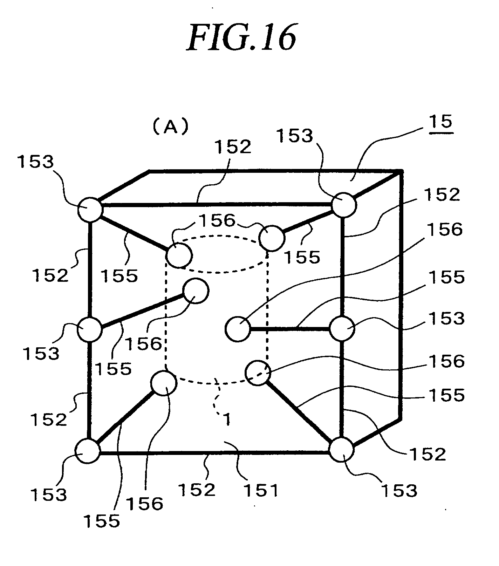

The calibration subject of the fourth invention for accomplishing the above object is, as shown for example in FIG. 16, a calibration subject 15 for providing a reference dimension for use in measuring the surface shape of a measuring object to be photographed in stereo, and comprises at least two cantilever arms 155, joint parts provided at the fixed ends of the cantilever arms 155 for changing the positions of the free ends of the cantilever arms 155, and reference targets (153, 156) provided at the free ends or the fixed ends of the cantilever arms 155.

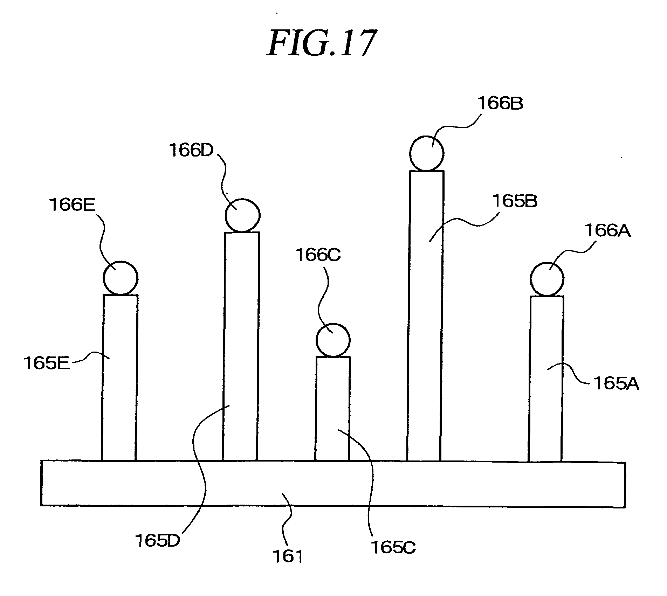

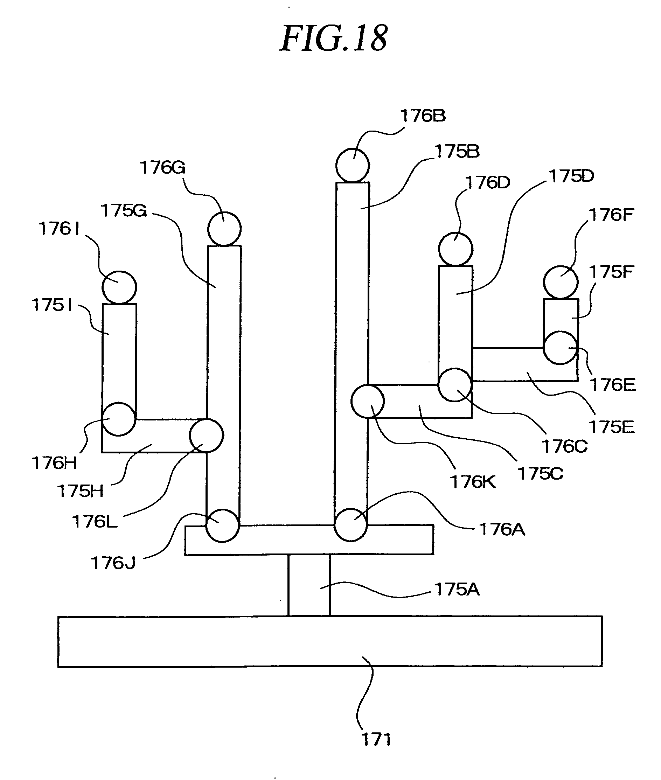

Preferably, as shown in FIG. 17 and Fig. 18, a plurality of the cantilever arms extend in a comb teeth fashion or in a tree fashion from the calibration subject, and each of the cantilever arms has one end connected to the calibration subject or another arm and the other end being free. The other ends of the cantilever arms can be formed into a shape close to that of the outer shape of the measuring object. To change the shape, the function of the joint parts provided on the fixed ends of the cantilever arms 155 is used, for example.

The calibration subject of the fifth invention for accomplishing the above object is, as shown in FIG. 16, a calibration subject 15 for providing a reference dimension for use in measuring the surface shape of a measuring object 1 to be photographed in stereo, and comprises frame arm parts 152 having approximately the same size as or being larger than the outer shape of the measuring object 1, bone arm parts 155 each having one end fixed to the frame arm parts 152 and the other end protruded toward the surface of the measuring object 1, reference targets 153 provided on the frame arm parts 152 and forming a reference side 151, and end reference targets 156 provided on the bone arm parts 155 and forming a position at a depth level which is different from that of the reference side 151.

Preferably, as shown in FIG. 16, the positions of the end reference targets 156 can be arranged into a shape close to the outer shape of the measuring object.

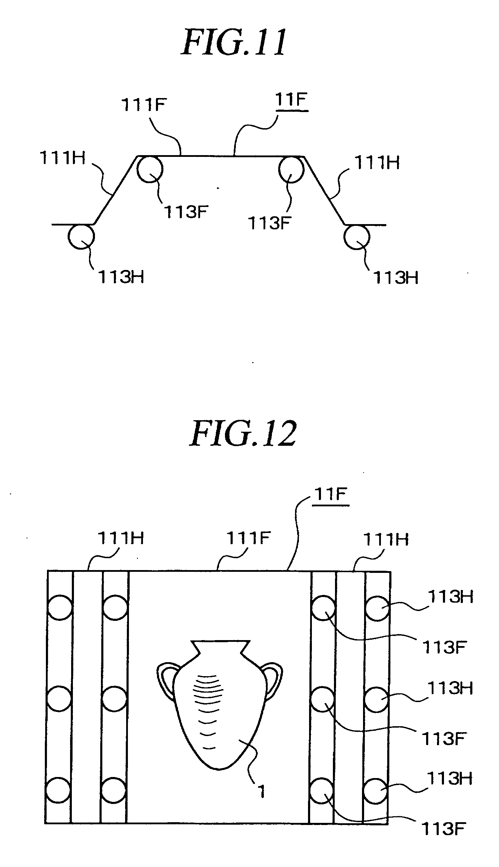

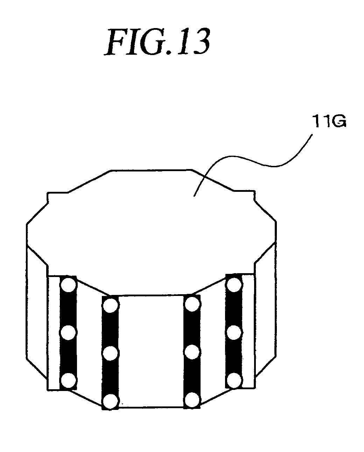

The calibration subject of the sixth invention for accomplishing the above object is, as shown in FIG. 11, a calibration subject 11F for providing a reference dimension for use in measuring the surface shape of a measuring object 1 to be photographed in stereo from a plurality of directions, and comprises reference targets (113F, 113H) located in the vicinity of the background of the measuring object 1, and the three-dimensional relative positional relations of the reference targets (113F, 113H) are determined in advance. As shown in FIG. 13, the calibration subject 11F and the measuring object 1 are relatively displaced when photographed from the plurality of directions so that the reference targets (113F, 113H) can surround the measuring object 1 in images photographed in stereo from the plurality of directions.

Preferably, the reference targets (113F, 113H) allow to distinguish the photographing direction by at least one of the shape, color, size and pattern thereof. Preferably, the reference targets have a generally spherical shape or are retroreflective type targets.

This application is based on the Patent Application No. 2001-236120 filed on August 3, 2001 in Japan, the content of which is incorporated herein, as part thereof.

Also, the present invention can be fully understood, referring to the following description in detail. Further extensive applications of the present invention will be apparent from the following description in detail. However, it should be noted that the detailed description and specific examples are preferred embodiments of the present invention, only for the purpose of the description thereof. From the detailed description, it will be apparent for the person ordinarily skilled in the art that modifications and changes may be made in a variety of manners, within the scope and spirits of the present invention.

The applicant does not intend to dedicate any disclosed embodiments to the public, and to the extent that any disclosed modifications or alterations may not literally fall within the scope of the claims, they are considered to be part of the invention under the doctrine of the equivalents.

### Brief Description of Drawings

FIG. 1 is a perspective view illustrating the structure of calibration subjects for explaining a first embodiment of this invention;
FIG. 2 is an explanatory diagram of reference point marks and side reference targets formed on the calibration subject;
FIG. 3 is an explanatory diagram of a three-dimensional coordinate system xyz for describing the positions of the reference point marks;
FIG. 4 is a block diagram illustrating the structure of one example of an apparatus for measuring the surface shape of a measuring object using the calibration subject;
FIG. 5 is an explanatory diagram of one pair of images of the measuring object and calibration subject photographed in stereo, where (A) and (B) show images photographed from right and left photographing directions, respectively;
FIG. 6 is a flowchart for generally explaining the entire process for measuring the measuring object using the apparatus shown in FIG. 4;
FIG. 7 is a flowchart for explaining a three-dimensional measuring process;
FIG. 8 is a perspective view illustrating the structure of calibration subjects according to a second embodiment;
FIG. 9 is a block diagram illustrating the structure of one example of an apparatus for measuring the surface shape of a measuring object using the calibration subject shown in FIG. 8;
FIG. 10 is a block diagram illustrating the structure of one example of an apparatus for measuring the surface shape of a measuring object using a calibration subject according to a third embodiment;
FIG. 11 is a plan view of a calibration subject according to a fourth embodiment for use in the embodiment shown in FIG. 10;
Fig. 12 is a view illustrating an image of the measuring object photographed using a folding screen type calibration subject;
FIG. 13 is a perspective view illustrating a frame body equivalent to the folding screen type calibration subject;
FIG. 14 is a view illustrating a calibration subject according to a fifth embodiment;
FIG. 15 is a view illustrating a calibration subject according to a sixth embodiment;
FIG. 16 is a view illustrating a calibration subject according to a seventh embodiment;
FIG. 17 is a view illustrating a calibration subject according to an eighth embodiment; and
FIG. 18 is a view illustrating a calibration subject according to a ninth embodiment.

### Best Mode for Carrying Out the Invention

Description will be hereinafter made of this invention with reference to the drawings. FIG. 1 is a perspective view illustrating the structure of calibration subjects for explaining a first embodiment of this invention. FIG. 1(A) shows a calibration subject having a tubular body with a rectangular cross-section, FIG. 1(B) shows a calibration subject having a tubular body with a hexagonal cross-section, FIG. 1(C) shows another aspect of the calibration subject having a tubular body with a rectangular cross-section, and FIG. 1(D) shows another aspect of the calibration subject having a tubular body with a hexagonal cross-section. As shown in FIG. 1(A), a calibration subject 11 having a tubular body with a rectangular cross-section has four reference sides 111. On each of the reference sides 111, at least six reference point marks 113 as reference targets are formed. This is because at least six known points are necessary to determine the attitude or coordinates of one plane.

An origin reference point mark 110 indicates an origin position O for three-dimensional measurement and is preferably a symbol such as " 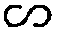 " or "∞" so that it can be distinguished from the reference point marks 113. The reference point marks 113 may be a white mark on a black background, a black mark on a white background, or a reflective mark such as a retroreflective target. The reference point marks 113 may be formed by attaching stickers on which the reference point marks 113 are printed or by directly printing the reference point marks 113 on the reference sides 111. The positions of the reference point marks 113 are described in a three-dimensional coordinate system xyz with respect to the origin reference point mark 110 as the origin of the coordinate system xyz.

As shown in FIG. 1(B), a calibration subject 11B having a tubular body with a hexagonal cross-section has six reference sides 111B. At least six reference point marks 113B are formed on each of the reference sides 111B, by which information necessary to determine the attitude or coordinates of one plane is provided.

Side reference targets 112 may be directly formed on the reference sides 111 of the calibration subject 11 in addition to the reference point marks 113 so that the reference sides 111 may be distinguished from one another. The side reference targets 112 have functions as reference point marks 113 in addition to being used to distinguish the reference sides 111 of the calibration subject 11 from one another. In the case of the tubular body with a rectangular cross-section, five reference point marks 113 and one side reference target 112a or 112b are formed on each reference side 111 as shown in FIG. 1(C). A calibration subject 11D having a tubular body with a hexagonal cross-section has six reference sides 111D, on each of which five reference point marks 113D and one side reference target 112c, 112d or 112e are formed as shown in FIG. 1(D). As above, the side reference targets 112a and 112b as shown in FIG. 1(C) and side reference targets 112c, 112d, and 112e as shown in FIG. 1(D) correspond to the side reference targets 112.

In the examples shown in FIG. 1(C) and FIG. 1 (D) , the reference sides 111 of the calibration subject 11 have different side reference targets 112. However, the same mark as the side reference target 112 may be used for all or some of the reference point marks 113 on each of the reference side 111. The side reference targets 112 may have different sizes or colors. The colors of the marks may be different for each reference side 111 of the calibration subject 11 so that the reference sides 111 can be distinguished from one another.

FIG. 2 is an explanatory diagram of reference point marks and side reference targets formed on the calibration subject. FIG. 2 (A) shows examples of the reference point marks and FIG. 2 (B) shows examples of the side reference targets. For the reference point marks, there may be used a pattern, graphic form or symbol, such as a strike mark (A1), white circle with black outline (A2) or black circle (A3), from which the three-dimensional positions of the reference points can be accurately obtained. The side reference targets are used to distinguish the reference sides 111 of the calibration subject 11, and may be a pattern, graphic form or symbol such as a hexagon (B1), white cross (B2), diamond (B3), numeral 1 (B4), numeral 2 (B5), numeral 3 (B6), black square (B7), square with diagonal lines (B8), square with grid (B9).

The reference point marks 113 and the side reference targets 112 may have a three-dimensional shape with high symmetry such as sphere or semi-sphere. When the reference point marks 113 and the side reference targets 112 have a three-dimensional shape with high symmetry such as sphere or semi-sphere, since the images of the marks are always circular or semi-circular irrespective of the photographing position, detection accuracy can be stabilized or improved. Also, when the reference point marks 113 and the side reference targets have a spherical shape, the three-dimensional coordinates of the calibration subject 11 can be obtained accurately and easily in valuing the calibration subject 11 with a contact-type three-dimensional measuring instrument in advance.

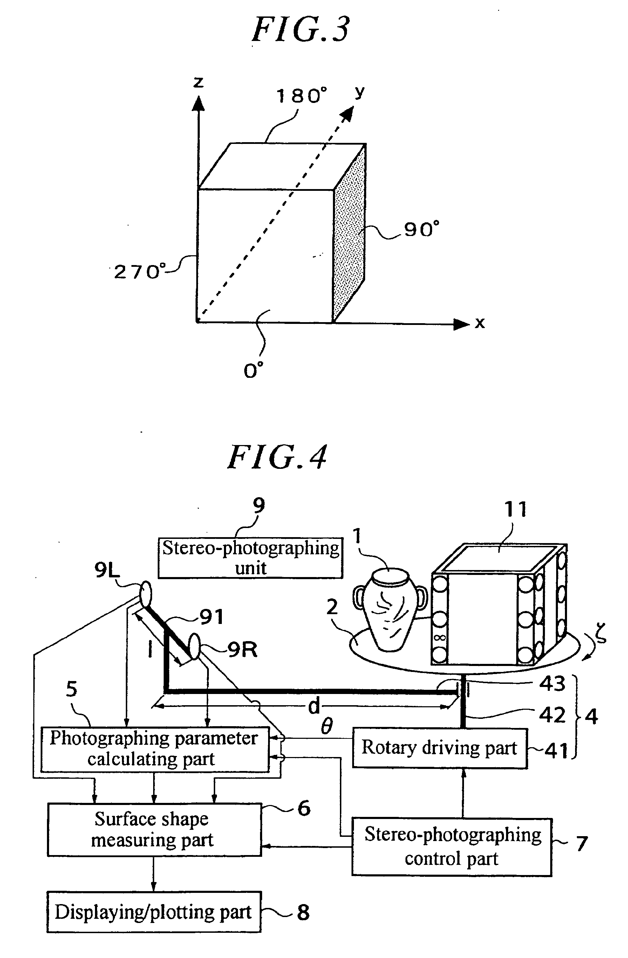

The positions of the reference point marks 113 on the calibration subject 11 must be measured using a three-dimensional coordinate system with a precise instrument in advance. FIG. 3 is an explanatory diagram of a three-dimensional coordinate system xyz for describing the positions of the reference point marks. In the three-dimensional coordinate system xyz, when the calibration subject 11 is a frame body with a rectangular cross-section, the coordinates of the reference point marks 113 on the calibration subject 11 are determined using an arbitrary reference side 111 as a reference face. For example, the xz plane is assigned to any one of the reference sides 111 as 0° direction, and other three reference sides 111 are designated as 90° direction, 180° direction and 270° direction, respectively, so that they can be distinguished from one another. Then, the zy plane is assigned to the reference sides 111 in the 90° direction and 270° direction and the xy plane is assigned to the reference side in the 180° direction.

In this embodiment, stereo-photographing is performed for each reference side 111 of the calibration subject 11. Thus, stereo-photographing is performed the same number of times as the number of the reference sides 111. The directions from which stereo-photographing is performed are preferably generally coincident with the directions normal to the reference sides 111. Thus, the number of the reference sides 111 of the calibration subject 11 is preferably determined based on the number of sides by which the entire circumference of the measuring object 1 is divided. To measure the measuring object 1 precisely, the number of the reference sides 111 of the calibration subject 11 has to be large. For example, six reference sides 111 are preferably provided on the calibration subject 11 as shown in FIG. 1(B).

FIG. 4 is a block diagram illustrating the structure of one example of an apparatus for measuring the surface shape of a measuring object using a calibration subject. In the drawing, a measuring object 1 is an object having a surface shape or surface pattern to be three-dimensionally measured in a non-contact manner such as a trove, human body, vehicle, or machine structure. A calibration subject 11 has reference point marks as reference points whose three-dimensional relative positional relations have been determined in advance and will be described in detail later. A table 2 is a stand to place the measuring object 1 on together with the calibration subject 11, and may be a stage.

A relative position changing part 4 has a function of rotating the table 2 in a direction ζ and comprises a rotary driving part 41 such as a motor, a table rotating shaft 42 for rotating the table 2 by the driving force of the rotary driving part 41, and a stereo-photographing part connecting rod 43. The stereo-photographing part connecting rod 43 keeps the distance d between the table 2 and the stereo-photographing unit 9 constant and supports the two imaging devices 9R and 9L attached to an imaging device fixing body 91 in attitudes oriented toward the table 2. The rotary driving part 41 may be a handle or grip which can be rotated by an operator since it can only generate a driving force to position the table 2 with an accuracy of a few degrees.

A stereo-photographing unit 9 comprises two imaging devices 9R and 9L such as CCDs (charge-coupled devices), digital cameras or film-type cameras which are, for example, attached to a rod 91 as the imaging device fixing body at a distance "1" apart from each other. The optical axes of the two imaging devices 9R and 9L are generally parallel to each other and oriented toward the measuring object 1. The direction θ from which the stereo-photographing unit 9 photographs the measuring object 1 is sent to the photographing parameter calculating part 5 and the surface shape measuring part 6 as a measurement signal from a rotational angle sensor attached to the table rotating shaft 42 or is tied to data of images photographed in stereo as photographing angle information.

A stereo-photographing control part 7, which controls the rotary driving part 41 to rotate the table 2 on which the measuring object 1 is placed and controls the stereo-photographing unit 9 to photograph the measuring object 1 from a plurality of directions, comprises, for example, a PLC (programmable logic controller).

A photographing parameter calculating part 5 extracts images of the reference points on the calibration subject 11 from the image data photographed in stereo from each stereo-photographing direction by the stereo-photographing unit 9 to obtain photographing parameters in each stereo-photographing direction based on the positions of the reference points. The photographing parameters, which are parameters used to convert a pair of images photographed in stereo from right and left photographing directions by the stereo-photographing unit 9 into rectified images which can be viewed stereoscopically, are the baseline length, photographing position and tilt of the stereo-photographing unit 9.

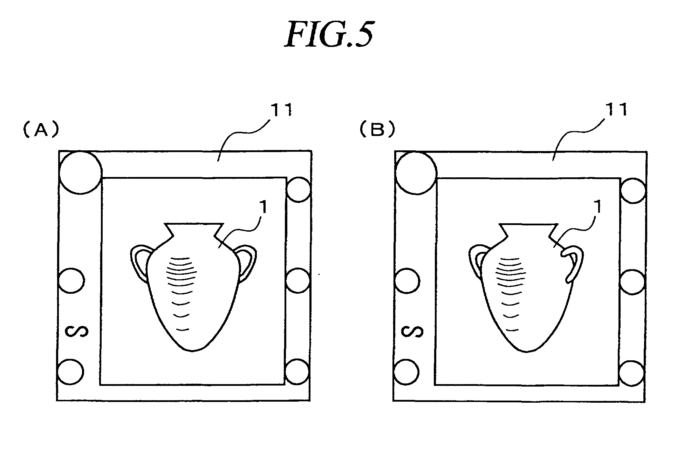

A surface shape measuring part 6 obtains the surface shape of the measuring object 1 based on the photographing parameters obtained in the photographing parameter calculating part 5 and the positions of images of the measuring object 1 photographed together with the images of the reference points of the calibration subject 11 in the photographed image data from which the photographing parameters have been obtained. FIG. 5 is an explanatory diagram of one pair of images of the measuring object and calibration subject photographed in stereo. FIG. 5(A) is an image photographed from the left photographing direction and FIG. 5(B) is an image photographed from the right photographing direction. As shown in FIG. 5, since a pair of right and left images photographed in stereo include the measuring object and the calibration subject, the photographing parameters obtained based on the calibration subject 11 are applicable to the image of the measuring object 1.

The measurement of the surface shape of the measuring object 1 in the surface shape measuring part 6 uses an operation method for measuring unevenness of a surface based on stereo images for use in aerial photogrammetry or the like. The stereo images herein are images obtained by rectifying a pair of images photographed in stereo from right and left photographing directions by the stereo-photographing unit 9 so that a viewer can see a stereoscopic image. It is preferred that the surface shape measuring part 6 extract the characteristic points of the measuring object 1, obtain the positions of the characteristic points, and then measure the entire surface shape of the measuring object 1 based on the thus obtained positions of the characteristic points.

A displaying/plotting part 8 comprises a display device such as a CRT and liquid crystal display for displaying the surface shape of the measuring object 1 measured by the surface shape measuring part 6, a plotter or printer for producing graphics on a sheet of paper, a digital plotter for producing three-dimensional impression data, or the like. The displaying/plotting part 8 may be a stereo monitor on which stereo images can be displayed. A stereo monitor can not only reproduce the measuring object 1 as a three-dimensional image but also allow an operator to perform measurement or make a drawing easily with reference to an image. The photographing parameter calculating part 5, the surface shape measuring part 6 and the displaying/plotting part 8 may be incorporated in a digital plotter or a personal computer.

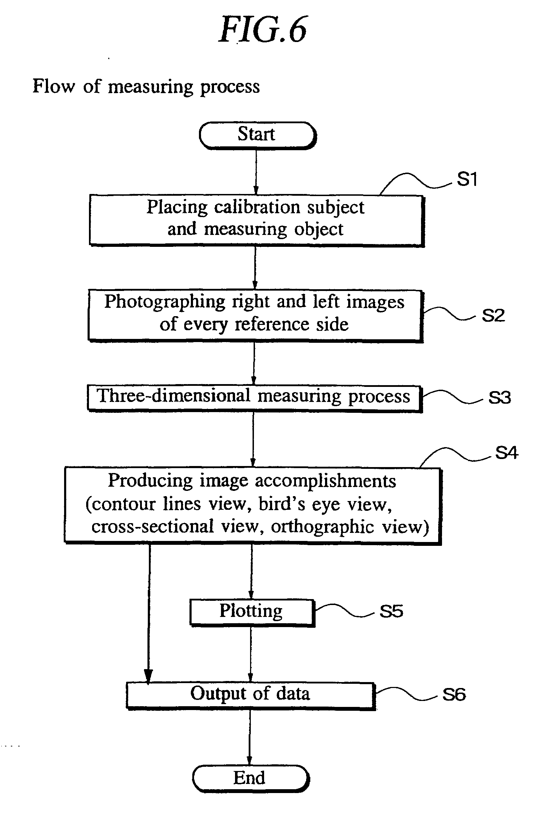

Description will be made of the process for measuring the surface shape of the measuring object 1 with an apparatus constituted as described above. FIG. 6 is a flowchart for generally explaining the entire process for measuring the measuring object with the apparatus shown in FIG. 4. First, the measuring object 1 and the calibration subject 11 are placed on the table 2 (S1). The position is so determined that the measuring object 1 is not hidden behind the calibration subject 11. Then, the stereo-photographing unit 9 photographs the reference sides 111 of the calibration subject 11 in stereo (S2).

To change the angle at which stereo-photographing is performed, the stereo-photographing control part 7 is controlled to rotate the table 2. When the calibration subject 11 has a tubular body with a rectangular cross-section, for example, the stereo-photographing unit 9 photographs at four angles of 0°, 90°, 180°, and 270°. At this time, if the measuring object 1 is hidden behind the calibration subject 11, the calibration subject 11 is moved on the table 2 so that the measuring object 1 cannot be hidden behind the calibration subject 11. Since the stereo-photographing is performed for each reference side 111, eight monaural images are taken in total by the imaging devices 9R and 9L in the case of the tubular body with a rectangular cross-section as shown in FIG. 1(A). In the case of the tubular body with a hexagonal cross-section as shown in FIG. 1(B), twelve monaural images are taken in total by the imaging devices 9R and 9L.

Then, the three-dimensional measuring process is executed on the images photographed in stereo from each stereo-photographing direction using the photographing-parameters obtained using the reference points on the calibration subject 11 (S3). Based on the result of the three-dimensional measurement of the measuring object 1, image accomplishments are produced (S4). For example, a contour lines view, a bird's eye view, a cross-sectional view, and/or an orthographic view are produced.

The plotting of the result of three-dimensional measurement is performed based on an orthogonal projection image of the measuring object 1 produced as a result of the three-dimensional measurement (S5). An image taken using a lens is a central projection image and is distorted since the subject is captured at the principal point of the lens. On the contrary, an orthogonal projection image is an image obtained by projecting a subject in parallel with a lens located at an infinite distance from the subject. Thus, the precise dimension of the subject is expressed in the image as in a map. If the plotting is not performed, step S5 may be skipped. Then, the result of the three-dimensional measurement of the measuring object 1 is outputted as data (S6). The data, which includes the accomplishments in the form of drawings, may be printed as images with a printer or outputted as a DXF data file. The data may be transferred to another CAD system and processed therein.

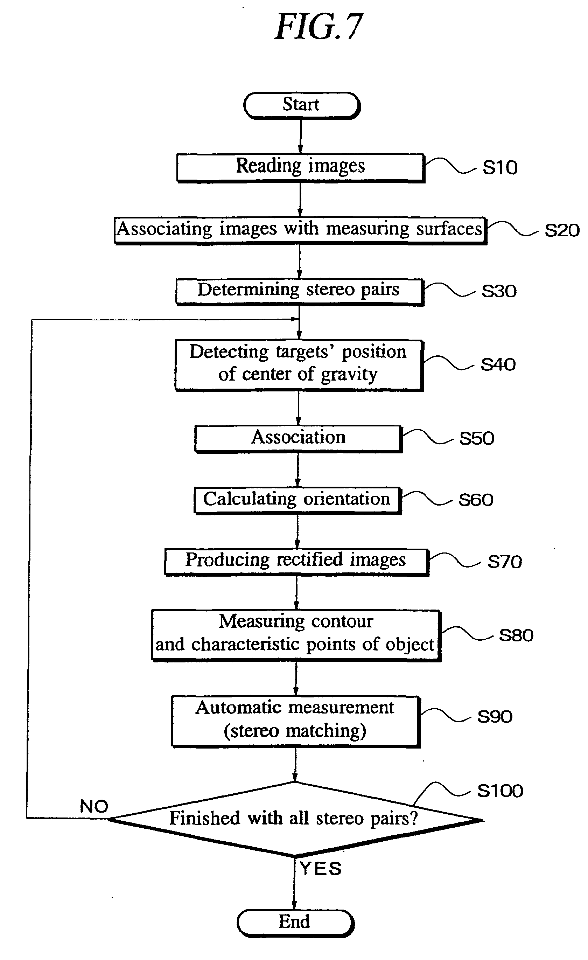

Description will be made in detail of the three-dimensional measuring process in step S3 with reference to the flowchart in FIG. 7. First, the photographing parameter calculating part 5 and the surface shape measuring part 6 read all the images photographed from every stereo-photographing direction by the stereo-photographing unit 9 as photographed image data (S10). The thus read photographed image data are associated with the reference sides 111 of the calibration subject 11 (S20). When only one reference side 111 is measured and plotted, the process in step S20 is not necessary. When an operator performs the process in step S20 manually, the operator manually determines a stereo pair images on the displaying/plotting part 8. At this time, the characteristics of the side reference targets 112 such as the shape, pattern or color are useful.

The process in step S20 is suitable to be executed automatically by image processing. Namely, image processing is used to distinguish the side reference targets 112 on the side reference sides 111. For example, the images of the side reference targets 112 on the reference sides 111 as template images are used to distinguish the marks by image correlation processing. In the image correlation processing, the sequential similarity detection algorithm (SSDA method) or normalized correlation method may be used. In this case, the marks can be distinguished more reliably by the normalized correlation processing. In the case of the normalized correlation method, the template with the highest correlation coefficient is determined as the corresponding reference side 111. The distinction of the side reference targets 112 may be made by a method of extracting characteristics or another pattern recognition method instead of by image correlation processing.

Then, stereo pairs of each reference side 111 are determined (S30). At this time, when the operator determines the stereo pairs, referring to the displaying/plotting part 8, possible errors which may occur when a pattern recognition method is mechanically applied can be avoided. The right and left images can be easily distinguished when photographing order is fixed to be from left to right, for example.

Then, the positions of the center of gravity of the side reference targets 112 and the reference point marks 113 are detected in a pair of stereo images of one reference side 111 (S40). The side reference targets 112 and the reference point marks 113 are also referred to simply as "targets". The positions of the reference point marks are detected roughly by, for example, a correlation method and the positions of the center of gravity of the reference point marks are then precisely calculated. The precise positions could be detected in one step. In that case, however, the operation takes a long time.

Then, the reference point marks in the two images whose centers of gravity have been detected are associated with the reference point marks whose coordinates have been precisely measured in advance (S50). When there are six reference point marks, for example, the six points on the reference side 111 are associated with the corresponding points. Since the positions of the reference point marks are known in advance, it can be predicted where the reference point marks are positioned in the images. When the reference point marks are different from the other reference point marks, the association can be executed more reliably.

Then, orientation calculation is executed to obtain the photographing parameters of the imaging devices 9R and 9L, such as the three-dimensional positions and tilts, the distance between the cameras (baseline length: 1) and so on based on the coordinate system of the calibration subject 11 (S60).

Then, the actual images of the measuring object 1 are rectified and reconstructed into stereo images which can be stereoscopically viewed based on the thus obtained photographing parameters (S70). Rectified image are distortion-free images without vertical parallax (horizontal lines are aligned). By the rectification process, the vertical parallax between the right and left images is removed and horizontal lines on the right and left images are aligned into one straight line, whereby distortion-free, rectified images can be obtained.

Then, the contour and characteristic points on each measuring surface of the measuring object 1 are measured (S80). The measuring surfaces of the measuring object 1 have a close relation with the reference sides 111 of the calibration subject 11. The measurement of the contour and characteristic points of the measuring object 1 is executed by designating corresponding points on the right and left images with a mouse or the like, referring to stereo images displayed on the displaying/plotting part 8. In the measuring process in step S80, only by designating the corresponding points on the right and left images, the three-dimensional coordinates of the positions can be determined from the principle of the stereo method since rectified images parallel to the measuring object 1 have been obtained based on the photographing parameters of the images.

Then, automatic measurement (stereo matching) is executed (S90). In the stereo matching process, area-based matching using the normalized correlation process is used. When the characteristic points have been measured in step S80, the information is also used. A large number of three-dimensional coordinates on the surface of the object can be thereby obtained.

From the coordinates of the corresponding points calculated by the automatic measurement, the three-dimensional coordinates of the positions are calculated. When all the stereo pairs of the measuring sides of the measuring object 1 are processed, the process is ended (S100). Otherwise, steps S40 to S90 are repeated on the stereo pair images of the measuring surfaces of the measuring object 1.

Based on the thus measured three-dimensional coordinates, image accomplishments can be created. Since the image accomplishments are created based on three-dimensional coordinate values, as the number of coordinate values is larger, the image accomplishments can be more accurate. The coordinate system on each measuring surface is the coordinate system of the calibration subject 11, so that a complete circumferential image of the measuring object 1 can be produced only by connecting the images of the measuring surfaces of the measuring object 1.

The processes in steps S20 and S30 may be the same as those shown in FIG. 7. However, when an angle detection mechanism is provided in the rotary driving part 41, the process of associating the images with the measuring surfaces in step S20 can be executed based on the rotational angle θ without image processing. Also, when the order of photographing each measuring surface of the measuring object 1 is fixed to be from left to right, for example, the process of determining stereo pair images in step S30 can be executed even when no side reference target 112 is provided on the calibration subject 11. When side reference targets 112 are provided on the calibration subject 11, the reference sides 111 can be reliably distinguished.

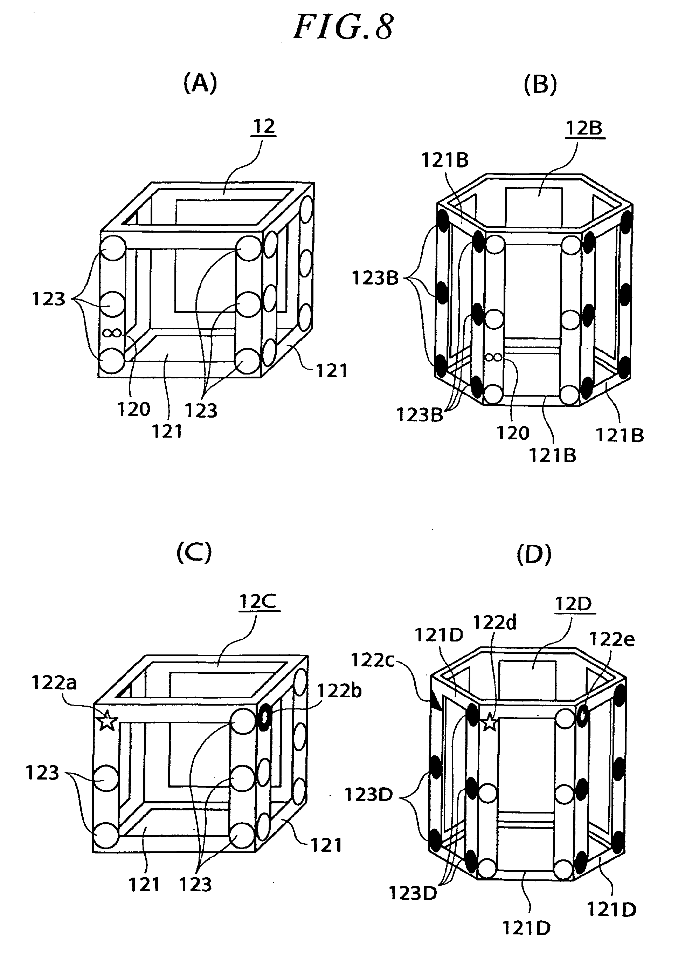

FIG. 8 is a perspective view illustrating the structure of calibration subjects according to a second embodiment. FIG. 8(A) shows a calibration subject having a frame body with a rectangular cross-section, FIG. 8(B) shows a calibration subject having a frame body with a hexagonal cross-section, FIG. 8(C) shows another aspect of the calibration subject having a frame body with a rectangular cross-section, and FIG. 8 (D) shows another aspect of the calibration subject having a frame body with a hexagonal cross-section. A frame type calibration subject 12 is substituted for the calibration subject 11 so that the calibration subject 11 does not hide the surface of the measuring object 1 in photographing, measuring and plotting the measuring object 1 from each photographing direction. The frame type calibration subject 12 is used to determine a coordinate system as a reference in rectifying images into stereo images and to obtain the positions and tilts of the two imaging devices for stereo-photographing. To improve the accuracy in the rectification, the frame type calibration subject 12 is preferably slightly larger than the measuring object.

As shown in FIG. 8(A), a frame type calibration subject 12 having a frame body with a rectangular cross-section has four reference sides 121. On each of the reference sides 121, at least six reference point marks 123 are formed along the frames. This is because at least six known points are necessary to determine the attitude or coordinates of one plane. The reference point marks 123 may be a white mark on a black background, a black mark on a white background, or a reflective mark such as a retroreflective target. The reference point marks 123 may be formed by attaching stickers on which the reference point marks 123 are printed or by directly printing the reference point marks 123 on the reference sides 121.

As shown in FIG. 8(B), a frame type calibration subject 12B having a frame body with a hexagonal cross-section has six reference sides 121B. At least six reference point marks 123B are formed on each of the reference sides 121B, by which information necessary to determine the attitude or coordinates of one plane is provided.

Side reference targets 122 may be directly formed on the reference sides 121 of the frame type calibration subject 12 in addition to the reference point marks 123 so that the reference sides 121 may be distinguished from one another. The side reference targets 122 have functions as reference point marks 123 in addition to being used to distinguish the reference sides 121 of the frame type calibration subject 12 from one another. In the case of the frame body with a rectangular cross-section, five reference point marks 123 and one side reference target 122a or 122b are formed on each reference side 121 as shown in FIG. 8(C). A frame type calibration subject 12D having a frame body with a hexagonal cross-section has six reference sides 121D, on each of which five reference point marks 123B and one side reference target 122c, 122d or 122e are formed as shown in FIG. 8(D). As above, the side reference targets 122a and 122b as shown in FIG. 8(C) and side reference targets 122c, 122d, and 122e as shown in FIG. 8(D) correspond to the side reference targets 122.

In the examples shown in FIG. 8 (C) and FIG. 8 (D), the reference sides 121 of the frame type calibration subject 12 have different side reference targets 122. However, the same mark as the side reference target 122 may be used for all or some of the reference point marks 123 on each of the reference sides 121. The side reference targets 122 may have different sizes or colors. The colors of the marks may be different for each reference side 121 of the frame type calibration subject 12 so that the reference sides 121 can be distinguished from one another.

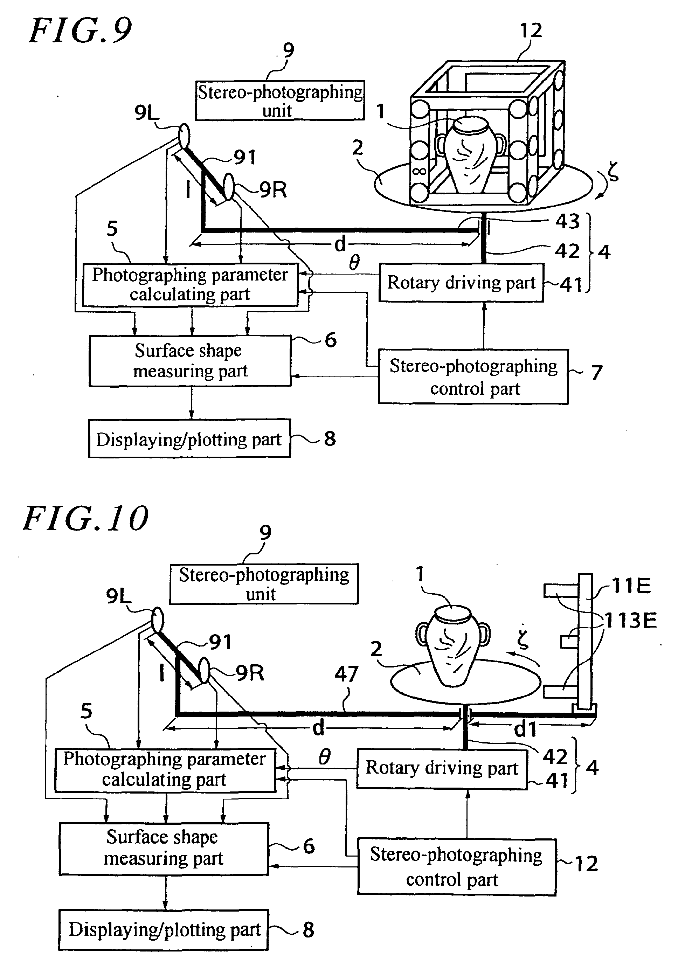

FIG. 9 is a block diagram illustrating the structure of one example of an apparatus for measuring the surface shape of a measuring object using the calibration subject shown in FIG. 8. In the surface shape measuring apparatus shown in FIG. 4, the stereo-photographing unit 9 photographs the calibration subject 11 and the measuring object 1 placed side by side on the same table 2. Thus, depending upon the photographing directions of the stereo-photographing unit 9, the measuring object 1 is hidden behind the calibration subject 11 and the measuring object 1 and the calibration subject 11 must be rearranged on the table 2 so that the measuring object 1 cannot be hidden behind the calibration subject 11. When the measuring object is 1 hidden behind the calibration subject 11, the surface of the measuring object 1 is not included in images photographed by the stereo-photographing unit 9 and the surface shape of the measuring object 1 cannot be measured.

When the frame type calibration subject 12 is used, the measuring object 1 can be photographed from any direction by the stereo-photographing unit 9 without being hidden behind the calibration subject 12. Thus, when the stereo-photographing unit 9 photographs the measuring object 1 from any direction, the calibration subject 11 and the measuring object 1 do not have to be rearranged on the table 2 and the photographing can be performed smoothly.

FIG. 10 is a block diagram illustrating the structure of one example of an apparatus for measuring the surface shape of a measuring object using a calibration subject according to a third embodiment. In the surface shape measuring apparatuses shown in FIG. 4 and FIG. 9, the measuring object 1 is placed on the table 2 together with the calibration subject 11. However, when the measuring object 1 is photographed from various directions, the measuring object 1 may be hidden behind the calibration subject 11 or the calibration subject 11 must be moved every time the photographing direction is changed.

The calibration subject 11 of the third embodiment is a three-dimensional calibration subject 11E, which has one reference side 111E on which at least six three-dimensional reference point marks 113E are provided. The three-dimensional reference point marks 113E are displaced concavely or convexly with respect to the reference side 111E and have different heights.

In FIG. 10, the relative position changing part 4 comprises a rotary driving part 41, a table rotating shaft 42 and a stereo-photographing part-calibrator connecting rod 47. The stereo-photographing part-calibrator connecting rod 47 keeps constant the distance d between the table 2 and the stereo-photographing unit 9 and the distance d1 between the table 2 and the three-dimensional calibration subject 11E, and supports the two imaging devices 9R and 9L attached to the imaging device fixing body 91 in attitudes oriented toward the table 2.

In an apparatus constituted as described above, even when the relative position changing part 4 rotates the table 2 on which the measuring object 1 is placed in the direction ζ, the front face of the three-dimensional calibration subject 11E is always included as the background of the measuring object 1 in images photographed by the stereo-photographing unit 9. At this time, the front face of the three-dimensional calibration subject 11E is always included in the images photographed by the stereo-photographing unit 9 from whichever direction the measuring object 1 is photographed. Thus, although the three-dimensional reference point marks 113E are provided on the single reference side 111 of the three-dimensional calibration subject 11E, when the relative position changing part 4 rotates the table 2 on which the measuring object 1 is placed in the direction ζ, the three-dimensional reference point marks 113E could be considered to be virtually arranged to surround the measuring object 1.

Namely, when the stereo-photographing control part 7 rotates the table 2 by 0°, 90°, 180°, and 270°, for example, so that the measuring object 1 can be photographed from four directions, the three-dimensional calibration subject 11E included in the images photographed by the stereo-photographing unit 9 is substantially equivalent to the frame type calibration subject 12 as shown in FIG. 8 (A). When the stereo-photographing control part 7 rotates the table 2 by 0°, 60°, 120°, 180°, 240° and 300°, for example, so that the measuring object 1 can be photographed from six directions, the three-dimensional calibration subject 11E included in the images photographed by the stereo-photographing unit 9 is substantially equivalent to the frame type calibration subject 12 as shown in FIG. 8(B).

FIG. 11 is a plan view of a calibration subject according to a fourth embodiment for use in the embodiment shown in FIG. 10. The calibration subject 11E for use in the embodiment shown in FIG. 10 may be a folding screen type calibration subject 11F since it need only be measured from one direction. The folding screen type calibration subject 11F has a center reference side 111F and inclined sides 111H provided on right and left sides of the reference side 111F. Six reference point marks 113F are arranged on the reference side 111F. Three reference point marks 113H are arranged on each of the right and left inclined sides 111H. With respect to the reference point marks 113F, the reference point marks 113H are projected in a three-dimensional manner.

FIG. 12 is a view for explaining an image of the measuring object photographed with a folding screen type calibration subject. In the data of an image photographed by the stereo-photographing unit 9, the measuring object 1 is included together with the folding screen type calibration subject 11F. Since the folding screen type calibration subject 11F has reference point marks 113F and reference point marks 113H which are arranged on different levels, the side shape, as well as the front shape, of the measuring object 1 can be measured.

FIG. 13 is a perspective view illustrating a frame body equivalent to the folding screen type calibration subject for use in the fourth embodiment. In the fourth embodiment, the folding screen type calibration subject 11F is placed on the table 2 in place of the three-dimensional calibration subject 11E. Then, when the table 2 is rotated by 0°, 90°, 180° and 270°, for example, and the measuring object 1 is photographed from four directions, the folding screen type calibration subject 11F in images photographed by the stereo-photographing unit 9 is substantially equivalent to a calibration subject 11G having a frame body with a star-shape cross section as shown in FIG. 13.

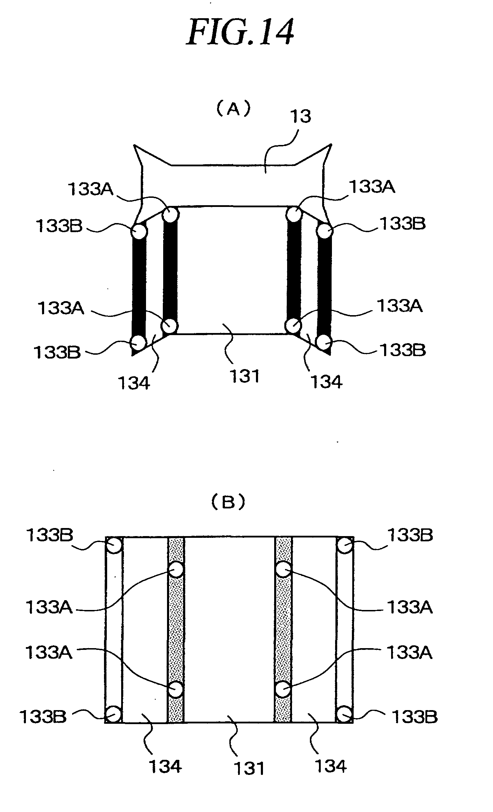

FIG. 14 is a view illustrating a calibration subject according to a fifth embodiment. FIG. 14 (A) and FIG. 14 (B) are a perspective view and a front view, respectively, of the calibration subject. The calibration subject is a one-level-depth calibration subject 13. The one-level-depth calibration subject 13 has reference sides 131, on each of which four reference point marks 133A are provided. Inclined surfaces 134 are provided on right and left sides of the reference sides 131. Each of the inclined surfaces 134 has an edge, at the upper and lower ends of which two reference point marks 133B are provided. Regarding the tubular calibration subject 11 with a rectangular cross-section shown in FIG. 1(A) as the basic form, the reference point marks 133A at the center represent the reference side 131 which is one level deeper than the reference point marks 133B at the four corners.

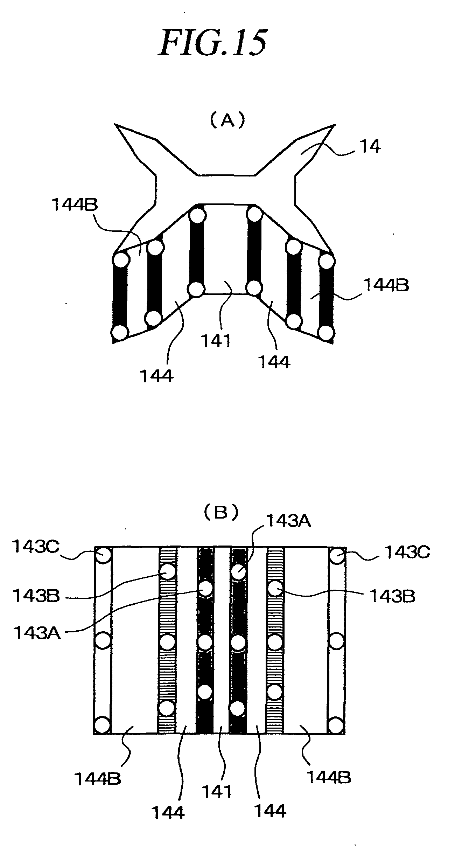

FIG. 15 is a view illustrating a calibration subject according to a sixth embodiment. FIG. 15 (A) and FIG. 15 (B) are a perspective view and a front view, respectively, of the calibration subject. The calibration subject is a two-level-depth calibration subject 14. The two-level-depth calibration subject 14 has reference sides 141, on each of which six reference point marks 143A are provided. First inclined surfaces 144 are provided on right and left sides of the reference sides 141. Each of the first inclined surfaces 144 has an edge, at the upper and lower ends of which three reference point marks 143B are provided. Second inclined surfaces 144B extend from the edges of the first inclined surfaces 144. Each of the second inclined surfaces 144B has an edge, at the upper and lower ends of which three reference point marks 143C are provided.

Here, description will be made, regarding the tubular calibration subject 11 with a rectangular cross-section shown in FIG. 1(A) as the basic form. The reference point marks 143B on the intermediate level represent the edges of the first inclined surfaces 144 which are one level deeper than the reference point marks 143C at the four corners. The reference point marks 143A at the center represent the reference side 141 which is two levels deeper than the reference point marks 143C at the four corners. If possible, the number of levels in the depth direction may be increased and more reference point marks 143 may be provided. By providing reference point marks in the depth direction as in the fifth and sixth embodiments, the accuracy in the depth direction of the coordinate system can be improved and stabilized.

Six reference point marks are sufficient for one photographing direction. The fifth embodiment shown in FIG. 14 (B) has eight reference point marks 133A and 113B in total. The sixth embodiment shown in FIG. 15(B) has eighteen reference point marks 133A, 113B and 113C in total. The larger the number of the reference point marks is, the more accurately the surface shape can be measured.

FIG. 16 is a view illustrating a calibration subject according to a seventh embodiment. Here, description will be made of an arm type calibration subject 15, regarding the frame type calibration subject 12 having a rectangular cross-section shown in FIG. 8 (A) as the basic form. The arm type calibration subject 15 has frame arm parts 152 which are generally the same size as or larger than the outer shape of the measuring object 1, a reference side 151 defined by the frame arm parts 152 and six reference point marks 153 as reference targets provided at the ends and the middle points of the frame arm parts 152.

Each of bone arm parts 155 as cantilever arms has one end attached to a position where the reference point mark 153 is attached to the frame arm part 152 and the other end protruded toward the surface of the measuring object 1. End reference targets 156 are formed at the protruded ends of the bone arm parts 155 and form a position at a depth level which is different from that of the reference side 151. The bone arm parts 155 have a joint function on the side of the frame arm part 152 so that the positions of the end reference targets 156 can be changed according the displacements of the ends of the bone arm parts 155.

In a device constituted as described above, the positions of the end reference targets 156 are changed in such a manner that the end reference targets 156 surround the measuring object 1. By locating the end reference targets 156 in the vicinity of the surface of the measuring object 1, the accuracy of the coordinate system can be stabilized and improved.

FIG. 17 is a view illustrating a calibration subject according to an eighth embodiment. A reference side 161 is any one of the reference sides of the tubular calibration subject 11 or the frame type calibration subject 12. Bone arm parts 165A to 165E have ends attached to a frame arm part constituting the reference side 161 and the other ends to which end reference targets 166A to 166E are attached, respectively. The bone arm parts 165A to 165E have different lengths. Thus, the heights and positions of the end reference targets 166A to 166E can be arranged by selecting the length of the bone arm parts 165A to 165E suitably. Preferably, a joint function is provided to frame arm parts of the bone arm parts 165A to 165E. Then, the positions of the end reference targets 166A to 166E can be arranged more variously.

In a device constituted as describe above, preferably the reference side 161 has a shape suitable for the directions from which the measuring object 1 is photographed and the locations of the end reference targets 166A to 166E in such directions are made clear. For example, the reference side 161 has a rectangular shape in the case of a calibration subject of the type shown in FIG. 1(A), and has a hexagonal shape in the case of a calibration subject of the type shown in FIG. 1 (B). Then, when the location of the reference points in each photographing direction have been made clear, the direction (side) and rotational angle in photographing can be clear.

FIG. 18 is a view illustrating a calibration subject according to a ninth embodiment. A reference side 171 is any one of reference sides of the tubular calibration subject 11 or the frame type calibration subject 12. Arms 175A to 175I are connected in a tree fashion. Namely, the arm 175A is a trunk with a T shape, one end of which is connected to a frame arm part constituting the reference side 171. The cantilever arms 175B and 175G as main stems extend from the T-shaped trunk of the arm 175A.

The cantilever arm 175C branches from the intermediate portion of the cantilever arm 175B as one main stem. The cantilever arm 175C branches at the end into the cantilever arms 175D and 175E. The short cantilever arm 175F extends from the cantilever arm 175E. The cantilever arm 175H branches from the intermediate portion of the cantilever arm 175G as the other main stem. The cantilever arm 175I extends from the end of the cantilever arm 175H.

A branch reference target 176A is provided at a position where the cantilever arm 175B branches from the T-shaped arm 175A. An end reference target 176B is provided at the end of the cantilever arm 175B. An end reference target 176K is provided at a position where the cantilever arm 175C branches from the cantilever arm 175B. A branch reference target 176C is provided at a position where the cantilever arm 175D branches from the cantilever arm 175C. End reference targets 176D and 176F are provided at the ends of the cantilever arms 175D and 175F, respectively. A branch reference target 176E is provided at a position where the cantilever arm 175F extends from the cantilever arm 175E.

A branch reference target 176J is provided at a position where the cantilever arm 175G branches from the T-shaped arm 175A. An end reference target 176G is provided at the end of the cantilever arm 175G. A branch reference target 176L is provided at a position where the cantilever arm 175H branches from the cantilever arm 175G. A branch reference target 176H is provided at a position where the cantilever arm 175I extends from the cantilever arm 175H. An end reference target 176I is provided at the end of the cantilever arm 175I.

The branch reference targets 176A, 176K, 176C, 176E, 176J, 176L and 176H provided at positions where arms branch have a joint function so that the positions of the branched arms can be changed with respect to the fixed arms. Thus, the cantilever arms 175B to 175I can be changed in shape according to the surface shape of the measuring object 1, and the heights and positions of the end reference targets and the branch reference targets can be arranged variously with respect to the reference side 171 using the arms having a joint function.

### Industrial Applicability

As has been described previously, the calibration subject of this invention is a calibration subject for providing a reference dimension for use in measuring the surface shape of a measuring object to be photographed in stereo, and comprises an origin reference point target corresponding to the origin position for three-dimensional measurement and reference targets which are arranged in such a manner that at least six of them are included in each of stereo images photographed from a plurality of directions. Since the positions of the reference targets are determined in advance with respect to the origin reference point target, the surface shape of the measuring object can be measured easily based on rectified stereo images of the measuring object.

The calibration subject of this invention comprises at least two cantilever arms, joint parts provided at the fixed ends of the cantilever arms for changing the positions of the free ends of the cantilever arms, and reference targets provided at the free ends or the fixed ends of the cantilever arms. Thus, the reference targets can be positioned so as to form a shape close to that of the surface shape of the measuring object. Therefore, by locating the reference targets in the vicinity of the measuring object, the measurement can be made with stability and high accuracy even if the measuring object and the stereo-photographing part are not positioned precisely.

## Claims

1. A calibration subject for providing a reference dimension for use in measuring the surface shape of a measuring object to be photographed in stereo, comprising:
an origin reference point target corresponding to the origin position for three-dimensional measurement; and
reference targets arranged in such a manner that at least six of them are included in each of stereo images photographed from a plurality of directions, the positions of said reference targets having been determined in advance with respect to said origin reference point target.

2. A calibration subject for providing a reference dimension for use in measuring the surface shape of a measuring object to be photographed in stereo, comprising:
reference targets **characterized** so that, when said calibration subject is photographed from a plurality of directions for three-dimensional measurement, the photographing direction can be unequivocally discriminated by said reference targets included in the photographed image data, said reference targets being arranged in such a manner that at least six of them are included in each of photographed images.

3. A calibration subject for providing a reference dimension for use in measuring the surface shape of a measuring object to be photographed in stereo, comprising:
at least three reference sides;
side reference targets for distinguishing said reference sides from one another; and
at least six reference targets provided on said reference sides, the positions of said reference targets having been known in advance,
wherein the surface shape of said measuring object to be photographed in stereo can be measured using said side reference targets and said reference targets.

4. A calibration subject for providing a reference dimension for use in measuring the surface shape of a measuring object to be photographed in stereo, comprising:
at least two cantilever arms;
joint parts provided at the fixed ends of said cantilever arms for changing the positions of the free ends of said cantilever arms; and
reference targets provided at said free ends or said fixed ends of said cantilever arms.

5. The calibration subject as claimed in claim 4,
wherein a plurality of said cantilever arms extend in a comb teeth fashion or in a tree fashion from said calibration subject;
each of said cantilever arms having one end connected to said calibration subject or another arm and the other end being free; and
said other ends of said cantilever arms can be formed into a shape close to that of the outer shape of said measuring object.

6. A calibration subject for providing a reference dimension for use in measuring the surface shape of a measuring object to be photographed in stereo, comprising:
frame arm parts having approximately the same size as or being larger than the outer shape of said measuring object;
bone arm parts each having one end fixed to said frame arm parts and the other end protruded toward the surface of said measuring object;
reference targets provided on said frame arm parts, said reference targets forming a reference side; and
end reference targets provided on said bone arm parts, said end reference targets forming a position at a depth level which is different from that of said reference side.

7. The calibration subject as claimed in claim 6, wherein the positions of said end reference targets can be arranged into a shape close to the outer shape of said measuring object.

8. A calibration subject for providing a reference dimension for use in measuring the surface shape of a measuring object to be photographed in stereo from a plurality of directions, comprising:
reference targets located in the vicinity of the background of said measuring object, the three-dimensional relative positional relations of said reference targets having been determined in advance,
wherein said calibration subject and said measuring object are relatively displaced when photographed from said plurality of directions so that said reference targets can surround said measuring object in images photographed in stereo from said plurality of directions.

9. The calibration subject as claimed in claim 8, wherein said reference targets allow to distinguish the photographing direction by at least one of the shape, color, size and pattern thereof.

10. The calibration subject as claimed in any one of claims 1 to 9, wherein said reference targets have a generally spherical shape or are retroreflective type targets.
